Europäisches Patentamt

European Patent Office

Office européen des brevets

(19)

(11) EP 0 750 237 B1

(12) EUROPÄISCHE PATENTSCHRIFT

(45) Veröffentlichungstag und Bekanntmachung des Hinweises auf die Patenterteilung:
04.12.2002 Patentblatt 2002/49

(51) Int Cl.$^7$: **G05D 1/00**, B64G 1/32, G05D 1/08

(21) Anmeldenummer: 96108919.0

(22) Anmeldetag: 04.06.1996

(54) **Erdorientierter Satellit und Verfahren zur Lage-, Nutations- und Raddrallregelung**

Earth-oriented satellite and method for attitude, nutation and wheel momentum control

Satellite orienté vers la terre et méthode de contrôle de l'attitude, de la nutation et du moment d'une roue cinétique

(84) Benannte Vertragsstaaten:
**DE FR GB IT**

(30) Priorität: **09.06.1995 DE 19520410**

(43) Veröffentlichungstag der Anmeldung:
**27.12.1996 Patentblatt 1996/52**

(73) Patentinhaber: **Astrium GmbH**
**81663 München (DE)**

(72) Erfinder:
- **Brüderle, Ernst, Dipl.-Math.**
**D-83646 Bad Tölz (DE)**
- **Surauer, Michael, Dipl.-Ing.**
**D-83339 Chieming (DE)**
- **Fichter, Walter, Dipl.-Ing.**
**D-80339 München (DE)**

(56) Entgegenhaltungen:
EP-A- 0 493 227     FR-A- 2 178 668
US-A- 5 343 398

- **JOURNAL OF GUIDANCE, CONTROL AND DYNAMICS, Bd. 16, Nr. 6, November 1993 - Dezember 1993, WASHINGTON DC, USA, Seiten 1078-1084, XP000416724 MARK E. PITTELKAU: "Optimal Periodic Control for Spacecraft Pointing and Attitude Determination"**
- **TWENTIETH ASILOMAR CONFERENCE ON SIGNALS, SYSTEMS & COMPUTERS, 10. - 12.November 1986, PACIFIC GROVE, CAL., USA, Seiten 487-492, XP002016755 A. AZIZ BHATTI: "MICROCOMPUTER BASED ADAPTIVE MAGNETIC ATTITUDE CONTROL OF A SPACECRAFT"**
- **ANNUAL CONFERENCE ON SMALL SATELLITES, 4TH AIAA/USU MEETING, Bd. 2, - 17.August 1990 LOGAN, UH, USA, Seiten 1-19, XP000390819 PARIMAL K. PAL ET AL.: "MAGNETIC ATTITUDE CONTROL SYSTEM FOR SPINNING SMALL SPACECRAFT"**

**Beschreibung**

1. Einleitung. Stand der Technik

Die vorliegende Erfindung bezieht sich auf die erdorientierte Ausrichtung eines Satelliten, der auf einer relativ niedrigen Bahn (deutlich niedriger als die geostationäre Bahn) mit mittlerer Inklination die Erde umkreist. Mittlere Inklination heißt, dass keine der drei Komponenten des Erdmagnetfeldes, ausgedrückt in einem erdorientierten bewegten Bahnreferenzsystem identisch verschwindet.

Üblicherweise werden die Solargeneratoren des Satelliten entsprechend der Tages- und Jahreszeit zur Sonne hin verdreht und verkippt, so dass sich relativ große Deviationsmomente im Trägheitssensor des Satelliten ergeben, was wiederum sehr hohe Störmomente aufgrund des Gravitationsgradienten zur Folge haben.

Aus der Druckschrift EP-A-0 493 227 ist ein Verfahren zur Lage-Nutations- und Raddrallregelung für einen Satelliten bekannt, bei dem neben einem Drallrad auch Magnetspulen verwendet werden, von denen eine im wesentlichen parallel zur Rollachse ausgerichtet ist und die andere im wesentlichen parallel zur Gierachse ausgerichtet ist. Die Lage-Nutationsund Raddrallregelung erfolgt dabei auf einer äquatorialen Bahn oder einer Bahn mit schwacher Inklination, wobei der Inklinationswinkel weniger als 10° beträgt. Auf einer solchen Bahn ist die Komponente des ersten Magnetfeldes in Richtung der Gierachse des Satelliten taktisch gleich Null. Damit kann im Rahmen der technischen Lehre dieses Dokumentes die Gierkomponente des Erdmagnetfeldes nicht für eine Lage-Nutations- und Raddrallregelung des Satelliten herangezogen werden.

Die Lageregelung eines Satelliten in der oben beschriebenen Bahn wird normalerweise mit Reaktionsrädern und mit Magnetspulen durchgeführt. Düsen werden meistens nur zur Drallentladung der Räder eingesetzt. Lageregelungssysteme die lediglich mit Rädern und Magnetspulen arbeiten, besitzen meistens drei achsenbezogene Magnetspulen. In /1/ ist ein Verfahren angegeben, das mit zwei Magnetspulen auskommt, die entlang der Satelliten x- und y-Achse montiert sind.

Die nachfolgend beschriebene Erfindung befasst sich ebenfalls mit der Regelung mittels zwei Magnetspulen, wobei sowohl andere Regelgesetze und Strategien zur Störgrößenkompensation im Vergleich zu /1/ als auch eine alternative Anordnung der Magnetspulen und zugehörige Regelungsverfahren diskutiert werden. Alle Maßnahmen haben eine deutliche Verbesserung des Regelverhaltens zur Folge.

2. Aufgabe der Erfindung

Die Erfindung erlaubt die erdorientierte Regelung eines Satelliten wobei lediglich zwei Magnetspulen, ein Drallrad und zweiachsig messender Erdsensor benötigt werden.

Die vorliegende Erfindung umfasst ein Verfahren zur Lage-, Nutations- und Raddrallregelung für einen Satelliten, der um zwei orthogonale Achsen drehbare und kippbare Solargeneratoren trägt, wobei die Lage-, Nutations- und Raddrallregelung mit Hilfe eines zweiachsig messenden Erdsensors, eines mit seiner Rotationsachse parallel zur Nickachse orientierten Drallrades sowie zwei Magnetspulen erfolgt, von denen eine Magnetspule im wesentlichen parallel zur Rollachse ausgerichtet ist und die zweite Magnetspule im wesentlichen parallel zur Gierachse ausgerichtet ist. Erfindungsgemäß ist vorgesehen, dass

- die Lage-, Nutations- und Raddrallregelung auf einer erdnahen Bahn mit mittlerer Inklination in erdorientierter Ausrichtung erfolgt,

- die Lage- und Nutationsregelung durch Aktivierung der Magnetspulen unter Anwendung jeweils eines linearen Regelgesetzes, welches im Falle der Lageregelung in Abhängigkeit von dem vom Erdsensor gemessenen Rollwinkel sowie dem durch einen Beobachter geschätzten oder von einem zusätzlichen, auf dem Satelliten angebrachtem Sensor gemessenen Gierwinkel und im Falle der Nutationsregelung in Abhängigkeit von einer auf der Basis der Erdsensormessungen ermittelter Rollwinkeländerung sowie einer durch den Beobachter geschätzten oder von einem zusätzlichen, auf dem Satelliten angebrachtem Sensor gemessener Gierwinkeländerung durchgeführt werden und

- die Raddrallregelung durch Aktivierung mindestens der parallel zur Rollachse ausgerichteten Magnetspule in Abhängigkeit von der Sollwertabweichung des Raddralls sowie der Gierkomponente des Erdmagnetfeldes unter Anwendung eines PI-Regelgesetzes erfolgt.

Die vorliegende Erfindung umfasst weiterhin ein weiteres Verfahren zur Lage-, Nutationsund Raddrallregelung für einen Satelliten, der um zwei orthogonale Achsen drehbare und kippbare Solargeneratoren trägt, bei dem ebenfalls die Lage-, Nutations- und Raddrallregelung mit Hilfe eines zweiachsig messenden Erdsensors, eines mit seiner Rotationsachse parallel zur Nickachse orientierten Drallrades sowie zwei Magnetspulen erfolgt, von denen eine Magnetspule im wesentlichen parallel zur Rollachse ausgerichtet ist, die zweite Magnetspule jedoch im wesentlichen parallel zur Nickachse ausgerichtet ist und wobei die Lage-, Nutations- und Raddrallregelung auf einer erdnahen Bahn mit mittlerer Inklination in erdorientierter Ausrichtung erfolgt. Erfindungsgemäß ist hier vorgesehen, dass

- die Lage- und Nutationsregelung durch Aktivierung der Magnetspulen unter Anwendung jeweils eines linearen Regelgesetzes, welches im Falle der Lageregelung in Abhängigkeit von dem vom Erdsensor gemessenen Rollwinkel sowie dem durch einen Beobachter geschätztem Gierwinkel und im Falle der Nutationsregelung in Abhängigkeit von einer auf der Basis der Erdsensormessungen ermittelter Rollwinkeländerung sowie einer durch den Beobachter geschätzten Gierwinkeländerung durchgeführt werden und

- die Raddrallregelung durch Aktivierung beider Magnetspulen in Abhängigkeit von der Sollwertabweichung des Raddralls sowie der Gierkomponente des Erdmagnetfeldes unter Anwendung eines PI-Regelgesetzes erfolgt.

Die wesentlichen Unterschiede insbesondere zwischen den Verfahren in /1/ und der vorliegenden Erfindung sind:

i) Die zwei Magnetspulen werden vorzugsweise entlang der Satelliten x- und z-Achse angeordnet.

ii) Es wird kein Magnetometer verwendet.

iii) Zur Satelliten-Lageregelung und -Nutationsregelung werden nicht nur eine Spule, sondern beide Spulen eingesetzt.

iv) Zur Regelung werden Regelgesetze verwendet, die der speziellen Magnetspulen-Konfiguration angepasst sind und gegenüber bisherigen Verfahren deutliche Verbesserungen zeigen.

v) Es werden Maßnahmen zur Störgrößenkompensation und Störgrößenreduktion angegeben, die ebenfalls Verbesserungen im Regelverhalten zur Folge haben.

Die Punkte ii) bis v) sind nicht nur vorteilhaft im Zusammenhang mit einer Magnetspulen-Konfiguration gemäß i) sondern auch beim Einsatz mit einer x-y-Magnetspulen-Konfiguration wie sie in /1/ beschrieben ist.

3. Technische Beschreibung

3.1 Satellitenbahn und Erdmagnetfeld

Im Rahmen der vorliegenden Erfindung wird von einer näherungsweisen kreisförmigen Satellitenbahn mit einer Bahninklination i ausgegangen, siehe Bild 3-1.
Als Bahn-Referenzsystem ($x_R$, $y_R$, $z_R$) wird ein Koordinatensystem bezeichnet das seinen Ursprung an der momentanen Position des Satelliten hat, mit der $z_R$-Achse zum Erdmittelpunkt und mit der $x_R$-Achse in Flugrichtung des Satelliten zeigt. Die $y_R$-Achse steht senkrecht auf der Bahnebene.
Das Erdmagnetfeld läßt sich in den Referenz-Koordinaten ($x_R$, $y_R$, $z_R$) näherungsweise ausdrücken als

$$(1) \qquad b_R = \begin{pmatrix} -B_0 & \sin i & \cos\eta \\ & B_0 \cos i & \\ -2B_0 & \sin i & \sin\eta \end{pmatrix}$$

wobei $B_0$ eine konstante Größe, i die Bahninklination und $\eta$ den Bahnwinkel des Satelliten bezeichnet, üblicherweise gezählt von aufsteigenden Knoten der Bahn. Alle drei Komponenten des Erdmagnetfeldes sind im allgemeinen ungleich Null.
Das so beschriebene Dipolmodell des Erdmagnetfelds stellt eine grobe Näherung des tatsächlichen Erdmagnetfeldes dar, es ist aber für die nachfolgenden Erläuterungen hinreichend genau.

3.2 Anordnung der Sensoren und Aktuatoren

a) Erdsensor

Ein zweiachsig messender Erdsensor ist in Richtung der Satelliten z-Achse montiert. Er liefert Lageabweichungen bzgl. der Erdorientierung, d.h. bzgl. des Referenzsystems ($x_R$, $y_R$, $z_R$) in Rollen (Winkel $\phi$ um die x-Achse) und Nicken (Winkel $\theta$ um die y-Achse), siehe Bild 3-2.

b) Drallrad

Das Drallrad ist entlang der Satelliten y-Achse montiert und steht daher im Nominalfall senkrecht auf der Bahnebene. Es wird mit einem nominal von Null verschiedenen Drallbias $h_w < 0$ betrieben und liefert Information über die Radgeschwindigkeit bzw. den Raddrall.

c) Magnetspulen

Es werden zwei Magnetspulen verwendet wobei zwischen zwei Konfigurationen unterschieden wird, siehe Bild 3-3.

   1) Anordnung entlang der Satelliten x- und y-Achse
   2) Anordnung entlang der Satelliten x- und z-Achse

Welche der beiden Konfigurationen ausgewählt wird, hängt ab von der Größe der y-Komponente des Magnetfeldes $b_R$. Ist diese groß genug, so wird Konfiguration 2 gewählt. Im einzelnen wird darauf weiter unten eingegangen.
Mit den Magnetspulen läßt sich ein Drehmoment $\tau$

$$(2) \qquad \tau = -\tilde{b}\, m$$

auf den Satelliten aufbringen, wobei b den (3x1)-Vektor des Erdmagnetfeldes und m den (3x1)-Vektor des magnetischen Moments der Spulen. (Strom) bezeichnet, beide ausgedrückt in Satellitenkoordinaten. Die Matrix $\tilde{b}$ bezeichnet die Kreuzprodukt-Matrix

$$(3) \qquad \tilde{b} = \begin{pmatrix} 0 & -b_z & b_y \\ b_z & 0 & -b_x \\ -b_y & b_x & 0 \end{pmatrix}$$

Für die Anordnung 1 ist die z-Komponente des magnetischen Moments $m_z = 0$, für die Anordnung 2 ist $m_y = 0$
Für kleine Ablagen des Satelliten vom Referenzsystem ($x_R$, $y_R$, $z_R$) gilt $b_R = b$ und somit

$$(4) \qquad \tau = -\tilde{b}_R\, m$$

Da alle drei Komponenten $b_x$, $b_y$, $b_z$ des Erdmagnetfeldes im allgemeinen ungleich Null sind, verursacht ein Stellmoment mittels Magnetspulen immer eine Verkopplung aller drei Satellitenachsen.

3.3 Lagebewegung des Satelliten

Im folgenden wird die Lagebewegung des Satelliten nicht wie sonst üblich als Differentialgleichung 2ter Ordnung in den Ablagewinkeln $\varphi = (\phi, \theta, \psi)^T$ beschrieben, sondern es wird ausgegangen von den Gleichungen

$$(5) \qquad I\dot{\omega} + \tilde{\omega}\,(I\omega + h) = \tau - \tau_m$$

$$(6) \qquad \dot{h}_0 + \tilde{\omega}_0\,h_0 = \tau_0$$

$$(7) \qquad h = \tau_m$$

Hierbei bedeuten:

I      Trägheitstensor des Satelliten
$\omega$      (3 x 1) - Vektor der inertialen Drehgeschwindigkeiten, ausgedrückt in Satellitenkoordinaten
$\omega_0$      (3 x 1) - Vektor der Orbitdrehrate, $\omega_0 = (0, -c_0, 0)^T$, mit $c_0 > 0$
h      (3 x 1) - Vektor des Raddralls, $h = (0, -h_w, 0)^T$, mit $h_w > 0$
$h_0$      (3 x 1) - Vektor des gesamten Satellitendralls, ausgedrückt im Referenzsystem ($x_R$, $y_R$, $z_R$)
$\tau$      (3 x 1) - Vektor der äußeren Drehmomten, ausgedrückt in Satellitenkoordinaten
$\tau_0$      (3 x 1) - Vektor der äußeren Drehmomte, ausgedrückt im Referenzsystem ($x_R$, $y_R$, $z_R$)
$\tau_m$      (3 x 1) - Vektor des Motormomentes des Drallrades, $\tau_m = (0, -\tau_w, 0)^T$.

Es werden nun folgende Annahmen getroffen.

$$(8) \qquad h \gg I\omega$$

$$(9) \qquad I = \begin{bmatrix} I_x & 0 & 0 \\ 0 & I_y & 0 \\ 0 & 0 & I_z \end{bmatrix}$$

Annahme (8) ist für erdorientierte Satelliten immer gegeben, da die inertialen Drehraten sehr klein sind. Annahme (9) ist nicht immer erfüllt, jedoch läßt sich der Trägheitstensor näherungsweise gemäß (9) beschrieben, da die Diagonalelemente von I dominieren. Nebendiagonalelemente haben eine Verkopplung der Koordinaten zur Folge, ändern aber am grundsätzlichen Entwurfsgedanken nichts.
Die 1. und 3. Zeile von (5) und (6) gibt

$$(10) \qquad \begin{pmatrix} \dot{\omega}_x \\ \dot{\omega}_z \end{pmatrix} = \begin{bmatrix} 0 & -h_w/I_x \\ h_w/I_z & 0 \end{bmatrix} \begin{pmatrix} \omega_x \\ \omega_z \end{pmatrix} + \begin{bmatrix} 1/I_x & 0 \\ 0 & 1/I_z \end{bmatrix} \begin{pmatrix} \tau_x \\ \tau_z \end{pmatrix}$$

$$(11) \qquad \begin{pmatrix} \dot{h}_{0x} \\ \dot{h}_{0z} \end{pmatrix} = \begin{bmatrix} 0 & c_0 \\ -c_0 & 0 \end{bmatrix} \begin{pmatrix} h_{0x} \\ h_{0z} \end{pmatrix} + \begin{bmatrix} 1 & 0 \\ 0 & 1 \end{bmatrix} \begin{pmatrix} \tau_{0x} \\ \tau_{0z} \end{pmatrix}$$

Gleichung (10) beschreibt die Nutationsbewegung. Unter der Voraussetzung vollständig gedämpfter Nutation, d.h. $\omega = 0$, beschreibt Gleichung (11) die Roll-/Gier-Lagebewegung des Satelliten, da

$$(12) \qquad h_0 = [E + \tilde{\varphi}] (I\omega + h)$$

woraus für die x- und z-Komponenten von $h_0$ für $\omega = (0\ 0\ 0)^T$ folgt

$$(13) \qquad h_{0x} = \psi\, h_w$$

$$(14) \qquad h_{0z} = -\phi\, h_w$$

Die zweite Zeile von (7) gibt

$$(15) \qquad \dot{h}_w = \tau_w$$

und unter Beachtung von $\omega_y = \theta - c_0$ ergibt die zweite Zeile von (5)

$$(16) \qquad \begin{pmatrix} \dot{\theta} \\ \ddot{\theta} \end{pmatrix} = \begin{bmatrix} 0 & 1 \\ 0 & 0 \end{bmatrix} \begin{pmatrix} \theta \\ \dot{\theta} \end{pmatrix} + \begin{pmatrix} 0 \\ 1/I_y \end{pmatrix} (\tau_y + \tau_w)$$

Die Gleichungen (10), (11), (15) und (16) können nun zu der Systemgleichung zusammengefaßt werden.

$$(17) \quad \begin{pmatrix} \dot{\omega}_x \\ \dot{\omega}_z \\ \dot{h}_{0x} \\ \dot{h}_{0z} \\ \dot{\theta} \\ \ddot{\theta} \\ \dot{h}_w \end{pmatrix} = \begin{bmatrix} 0 & -\dfrac{h_w}{I_x} & 0 & 0 & 0 & 0 & 0 \\ \dfrac{h_w}{I_z} & 0 & 0 & 0 & 0 & 0 & 0 \\ 0 & 0 & 0 & c_0 & 0 & 0 & 0 \\ 0 & 0 & -c_0 & 0 & 0 & 0 & 0 \\ 0 & 0 & 0 & 0 & 0 & 1 & 0 \\ 0 & 0 & 0 & 0 & 0 & 0 & 0 \\ 0 & 0 & 0 & 0 & 0 & 0 & 0 \end{bmatrix} \begin{pmatrix} \omega_x \\ \omega_z \\ h_{0x} \\ h_{0z} \\ \theta \\ \dot{\theta} \\ h_w \end{pmatrix} + \begin{bmatrix} 1/I_x & 0 & 0 & 0 \\ 0 & 0 & 1/I_z & 0 \\ 1 & 0 & 0 & 0 \\ 0 & 0 & 1 & 0 \\ 0 & 0 & 0 & 0 \\ 0 & 1/I_y & 0 & 1/I_y \\ 0 & 0 & 0 & 1 \end{bmatrix} \begin{pmatrix} \tau_x \\ \tau_y \\ \tau_z \\ \tau_w \end{pmatrix}$$

Aus (17) erkennt man, daß die Nutationsbewegung, die Drall- (bzw. Roll/Gier Lage-) bewegung, die Nickbewegung und die Bewegung des Raddralls voneinander entkoppelt sind.

Das äußere Moment $\tau = (\tau_x, \tau_y, \tau_z)^\tau$ setzt sich zusammen aus einen Stellmoment $\tau_c$ der Regelung und einem Störmoment $\tau_D$ auf Grund äußerer Störungen.
Der dominante Beitrag der äußeren Störmomente entsteht durch den Gravitationsgradienten, da auf Satellitenbahnen wie sie hier betrachtet werden die Solargeneratoren nicht nur um den Winkel $\alpha$ verdreht sondern auch um den Winkel $\beta$ verkippt werden müssen, siehe Bild 3-4. Für diese Konfiguration erhält man als (lageunabhängiges) Störmoment

$$(18) \qquad \tau_D = 3 c_0^2 \begin{pmatrix} -I_{yz} \\ I_{xz} \\ 0 \end{pmatrix}$$

$$(19) \qquad I_{yz} = 2 \cdot \cos\alpha \left[ (I_{Fy} - I_{Fz} - c^2 m_F) \sin\beta \cos\beta - l c m_F \sin\beta \right]$$

$$(20) \qquad I_{xz} = \sin 2\alpha \left[ -I_{Fx} + I_{Fy} \sin^2\beta + I_{Fz} \cos^2\beta - \sin^2\beta \, c^2 m_F \right]$$

$I_{Fx}$, $I_{Fy}$, $I_{Fz}$ bezeichnen die Haupttragheitsmomente des Solargenerators $m_F$ die Masse eines Solargenerators, $\alpha$ ist der Drehwinkel, $\beta$ der Kippwinkel eines Solargenerators und l und c sind Abstände, siehe auch Bild 3-4.

Der Winkel $\alpha$ ändert sich mit der Geschwindigkeit $c_o$ (Orbitdrehrate), d.h. $2\pi$ pro Orbit. Der Winkel $\beta$ ändert sich nur saisonal, entsprechend des Sonnenstandes und kann darum für einen Orbit als konstant angesehen werden. Für eine typische Satellitenkonfiguration ist $I_{yz} > I_{xz}$, so daß der größte Beitrag des Störmomentes um die x-Achse des Satelliten wirkt.

3.4 Regelungskonzept

Entsprechend der Darstellung (17) der Strecke kann bei der Lageregelung zwischen folgenden Teilreglern unterschieden werden:

-   Nutationsregelung für $\omega_x$, $\omega_z$
-   Drallregelung für $h_{0x}$, $h_{0z}$, entspricht einem Lageregler für Rollen und Gieren
-   Regler zur Entladung des Raddralls $h_w$
-   Regelung für den Nickwinkel $\theta$

Der Nickregler verwendet den Erdsensor zur Messung des Nickwinkels und das Drallrad als Stellglied. Es wird ein Standard PD- oder PID-Regler verwendet, der im folgenden nicht weiter beschrieben wird.

Die Regelung des Raddralls erfolgt über die Messung der Geschwindigkeits-Information das vom Drallrad geliefert wird. Als Stellglieder werden die Magnetspulen benutzt.

Der Nutationsregler, sowie der Drallregler für $h_{0x}$, $h_{0z}$ verwendet die Rollwinkel-Messung des Erdsensors und einen Beobachter zur Schätzung von $\omega_z$ und $h_{0x}$. Als Stellglieder werden ebenfalls die Magnetspulen benutzt.

Zusätzlich zu den oben genannten Teilreglern werden bekannte Störgrößen soweit möglich mittels Magnetspulen direkt kompensiert.

Eine Übersicht der gesamten Regelung zeigt Bild 3-5 Hier wird zwischen Nick-Lageregelung, Nutationsregelung und Drallregelung unterschieden, wobei die Drallregelung aus der Regelung von ($h_{0x}$ $h_{0z}$) und aus der Raddrall-Regelung besteht.

3.5 Regler für Magnetspulen in x/z-Konfiguration

Regelgesetze

Für diese Stellglied-Konfiguration erhält man folgenden Zusammenhang zwischen magnetischem Moment ($m_x$ $m_z$)$^T$ und Stellmoment $\tau_c$, siehe (3), (4)

$$(21) \qquad \begin{pmatrix} \tau_{cx} \\ \tau_{cy} \\ \tau_{cz} \end{pmatrix} = \begin{bmatrix} 0 & -b_y \\ -b_z & b_x \\ b_y & 0 \end{bmatrix} \begin{pmatrix} m_x \\ m_z \end{pmatrix}$$

Das magnetische Moment $(m_x\ m_z)^T$ setzt sich aus mehreren Komponenten zusammen, entsprechend den verschiedenen Teilreglem. Es ist

$$(22) \qquad \begin{pmatrix} m_x \\ m_z \end{pmatrix} = \begin{pmatrix} m_x^{(h)} \\ m_z^{(h)} \end{pmatrix} + \begin{pmatrix} m_x^{(\omega)} \\ m_z^{(\omega)} \end{pmatrix} + \begin{pmatrix} m_x^{(hw)} \\ 0 \end{pmatrix} + \begin{pmatrix} 0 \\ m_z^{(c)} \end{pmatrix}$$

wobei die Indizes h, $\omega$, $h_w$ und c für die Drallregelung, Nutationsregelung, Raddrall-Regelung und Störgrößenkompensation stehen. Die verschiedenen Anteile werden nachfolgend beschrieben.

Betrachtet man zunächst nur das x/z-Teilsystem, so hat man

$$(23) \qquad \begin{pmatrix} \tau_x \\ \tau_z \end{pmatrix} = \begin{bmatrix} 0 & b_y \\ -b_y & 0 \end{bmatrix} \begin{pmatrix} m_x \\ m_z \end{pmatrix}$$

Die Komponente $b_y$ des Magnetfeldes ist zwar wesentlich kleiner als $b_z$ und auch als $b_x$, insbesondere wenn man berücksichtigt, daß die Dipolachse des Magnetfeldes nicht senkrecht auf der Äquatorebene steht, sondern demgegenüber um ca. 11° gekippt ist (d.h. $b_{Rymin} = B_0 \cos(i + 11°)$ im schlimmsten Fall), jedoch kann $b_y$ als näherungsweise konstant betrachtet werden, da sich das Vorzeichen nie ändert. Darum kann zur Regelung der x/z Bewegung (Nutation und Lage) ein einfaches lineares Regelgesetz verwendet werden:

$$(24) \qquad \begin{pmatrix} m_x^{(\omega)} \\ m_z^{(\omega)} \end{pmatrix} = \underbrace{\begin{pmatrix} k_{11}^{(\omega)} & k_{13}^{(\omega)} \\ k_{31}^{(\omega)} & k_{33}^{(\omega)} \end{pmatrix}}_{K^{(\omega)}} \begin{pmatrix} \omega_x \\ \omega_z \end{pmatrix}$$

für die Nutation bzw. für die Lage

$$(25) \qquad \begin{pmatrix} m_x^{(h)} \\ m_z^{(h)} \end{pmatrix} = \underbrace{\begin{pmatrix} k_{11}^{(h)} & k_{13}^{(h)} \\ k_{31}^{(h)} & k_{33}^{(h)} \end{pmatrix}}_{K^{(h)}} \begin{pmatrix} h_{0x} \\ h_{0z} \end{pmatrix}$$

Um zu große Stellgroßen bei der Nutationsdämpfung zu vermeiden, wird $K^{(\omega)}$ zu

$$(26) \qquad K^{(\omega)} = \begin{pmatrix} k_{11}^{(\omega)} & 0 \\ 0 & 0 \end{pmatrix} \begin{pmatrix} \omega_x \\ \omega_z \end{pmatrix}$$

gewählt, was nur eine Dämpfung der Nutationsbewegung, aber keine Eckfrequenzenerhöhung zur Folge hat.

Betrachtet man nur die Lagebewegung des isolierten x/z-Teilsystems, so ergibt sich als Übertragungsfunktion des geschlossenen Regelkreises

$$(27) \qquad \begin{pmatrix} h_{0x} \\ h_{0z} \end{pmatrix} = \begin{bmatrix} s + b_y k_{13} & c_0 + b_y\, k_{33} \\ -(c_0 + b_y k_{11}) & s - b_0 k_{31} \end{bmatrix} \frac{1}{\det} \tau_D$$

$$(28) \qquad \det = s^2 + sb_y\,(k_{13}\text{-}k_{31}) + c_0^2 + c_0 b_y\,(k_{11}+k_{33}) + b_y^2\,(k_{11}k_{33}\text{-}k_{31}k_{13})$$

Da das größte Strömoment in der x-Achse einwirkt, wird günstigerweise $k_{11} = 0$ gewählt um den Einfluß auf $h_{0z}$ (d.h. auf den Rollwinkel $\phi$) zu minimieren. Es ergibt sich dann für

$$(29) \qquad k^{(h)} = \begin{bmatrix} 0 & k_{13}^{(h)} \\ k_{31}^{(h)} & k_{33}^{(h)} \end{bmatrix}$$

In (21) erkennt man, daß die Stellgliedaktivität in $(m_x, m_z)^T$ nicht nur die x/z-Bewegung regelt, sondern auch über die Komponenten $b_z\, b_x$ in die y-Achse einkoppelt und somit eine Änderung des Raddralls hervorruft.

Der Raddrall wird nun ebenfalls mit den Magnetspulen ausgeregelt, wobei vorzugsweise die x-Spule verwendet wird, da dies nur eine Kopplung in die z-Achse bewirkt (über $b_y$) und nicht in die x-Achse, wo das Störmoment ohnehin schon sehr groß ist.

Das Regelgesetz lautet

$$(30) \qquad m_x^{(hw)} = \frac{\hat{b}_z}{|\hat{b}_z|^2} \left( k_p + \frac{k_I}{s} \right) (h_w - h_{wRef})$$

Wichtig ist hier der Integralanteil $k_I/s$. Hierdurch wird erreicht, daß der Raddrall $h_w$ relativ gut ausgeregelt wird, die Reglerverstarkung jedoch relativ klein bleibt, d.h. die x/z-Lageregelung wird nur relativ schwach von der Raddrall-Regelung gestört. Man erkauft sich diese schwache Störung durch eine langsame Dynamik im Raddrallregelkreis, was jedoch in der Praxis durch langsame Anfahrvorgange berücksichtigt werden kann.

Die Größe $b_z$ in (30) steht für die geschätzte z-Komponente des Magnetfeldes, ausgedrückt im Referenzsystem $(x_R, y_R, z_R)$. Sie wird ermittelt durch ein entsprechendes Magnetfeldmodell, das an Bord des Satelliten berechnet wird.

Die Regelgesetze (24) und (25) benötigen nicht nur die Geschwindigkeit $\omega_x$ und $h_{0z}$ (d.h. die Lage $\phi$) als Eingangsgröße, sondern auch die Geschwindigkeit $\omega_z$ und den Drall $h_{0x}$ (d.h. die Lage $\psi$) Falls nicht zusätzlich Sensoren zur Messung der letzten beiden Größen vorhanden sind, werden sie durch einen Beobachter geschätzt. Dies ist immer möglich, da die Beobachtbarkeit durch die Verkopplung von x- und z-Achse durch den Raddrall stets gewährleistet ist.

<u>Störgrößenkompensation</u>

Die dominante Storung durch den Gravitationsgradienten wirkt in der Satelliten x-Achse. Die Störung in der y-Achse ist wesentlich kleiner (siehe Gleichungen (18), (19), (20)) und kann mittels Drallrad auch leicht ausgeregelt werden

Die x-Störung wird direkt kompensiert durch

$$(31) \qquad m_t^{(c)} = \frac{\hat{\tau}_{Dx}}{b_y}$$

$$(32) \qquad m_x^{(c)} = 0$$

wobei $\hat{\tau}_{Dx}$ mit (18) und (19) an Bord des Satelliten berechnet werden kann, da Meßwerte von $\alpha$ und $\beta$ vom Dreh- bzw. Kippmechanismus des Solargenerators geliefert werden.

<u>Storgrößenreduktion</u>

Bei gleichmäßiger Drehung der Solargeneratoren mit $\dot{\alpha} = c_0$ erhält man ein sinusförmiges Störmoment $\tau_{Dx}$ um die x-Achse, siehe Bild 3-6

Werden die Solargeneratoren im Bereich der Nulldurchgänge angehalten und ein Bereich der Extrema wesentlich schneller gedreht, so ergibt sich ein Störmomentenprofil um die x-Achse gemäß Bild 3-7. Zwischen den Extrema und den Haltepunkten hat man dann einen Winkel von $+\Delta\alpha$, zwischen Haltepunkten und Extrema einen Winkel von $-\Delta\alpha$ bzgl. dem nominalem Drehwinkel $\alpha$.

Durch diese Vorgehensweise wird zwar das Maximum des Störmomentes nicht kleiner, jedoch verkleinert sich das zeitliche Integral der Störung wesentlich, was eine deutliche Verbesserung des Regelverhaltens zur Folge hat.

### 3.6 <u>Regler für Magnetspulen in x-/y-Konfiguration</u>

<u>Regelgesetze</u>

Hier hat man folgenden Zusammenhang zwischen Stellmoment $\tau_c$ und magnetischem Moment $(m_x, m_y)$

$$(33) \qquad \tau_c = \begin{pmatrix} 0 & b_z \\ -b_z & 0 \\ b_y & -b_x \end{pmatrix} \begin{pmatrix} m_x \\ m_y \end{pmatrix}$$

Es besteht also eine direkte Verkopplung zwischen der x- und z-Achse durch das (3, 2) Element $-b_x$ der Ansteuerungsmatrix. Zunächst wird die Regelung des Dralls (Lage) $h_0$ und des Raddralls $h_w$ in zusammengefaßter Form betrachtet.

Mit dem Regelgesetz

$$(34) \qquad \begin{pmatrix} m_x^{(h)} \\ m_y^{(h)} \end{pmatrix} = E \; K^{(h)} \begin{pmatrix} h_{0x} \\ \Delta h \\ h_{0z} \end{pmatrix}$$

und den Abkürzungen

$$(35) \qquad E = \begin{pmatrix} 1 & b_x/b_y \\ 0 & 1 \\ 0 & 0 \end{pmatrix}$$

$$(36) \qquad K^{(h)} = \begin{pmatrix} k_{11} & k_{12} & k_{13} \\ k_{21} & k_{22} & k_{23} \end{pmatrix}$$

$$(37) \qquad \Delta h = \left( k_p + \frac{k_i}{s} \right) ( h_w - h_{wRef} )$$

kann eine direkte Entkopplung der x- und z-Achse erreicht werden.

Mit (33), (34), (35) ergibt sich

$$(39) \qquad \tau_c = \begin{pmatrix} 0 & -b_x \\ b_x & \dfrac{b_x b_z}{b_y} \\ -b_y & 0 \end{pmatrix} K^{(h)} \begin{pmatrix} h_{0x} \\ \Delta h \\ h_{0z} \end{pmatrix}$$

Die x- und z-Achse sind mit diesem Regelgesetz also nicht direkt verkoppelt, sondern nur über die y-Achse.

Wird nun für den Entwurfsvorgang wiederum zunächst nur das x/z-Teilsystem betrachtet, so ergibt sich folgende Übertragsfunktion für den geschlossenen Regelkreis

$$(40) \qquad \begin{pmatrix} h_{0x} \\ h_{0z} \end{pmatrix} = \begin{pmatrix} s + b_y k_{13} & c_0 - b_x k_{23} \\ -(c_0 + b_y k_{11}) & s + b_x k_{21} \end{pmatrix} \frac{1}{\det} \tau_D$$

$$(41) \qquad \det = s^2 + s(b_y k_{13} + b_z k_{21}) + c_0^2 + c_0 (b_y k_{11} - b_z k_{23}) + b_y b_z (k_{13} k_{21} - k_{11} k_{23})$$

Aus denselben Gründen wie bei der x/z-Konfiguration der Magnetspulen wird üblicherweise $k_{11} = 0$ gewählt. $k_{13}$ wird als eine konstante Größe gewählt, da sie mit dem Faktor $b_y$ in (40) eingeht.

Mit der Wahl

$$(42) \qquad k_{23} = \hat{k}_{23} \frac{\hat{b}_z}{B_z^2}, \quad \hat{k}_{23} \text{ konstant}$$

$$(43) \qquad k_{21} = \hat{k}_{21} \, \frac{\hat{b}_z}{B_z^2}, \; \hat{k}_{21} \; konstant$$

kann im Mittel nicht nur die Dämpfung des geschlossenen Kreises (40), sondern auch die Eckfrequenz beeinflußt werden. $B_z$ bedeutet hier das Maximum von $\hat{b}_z(t)$ über der Zeit.

Die gefilterte Abweichung des Raddralls $\Delta h$ wird über die x-Spule ausgeregelt, darum wird $k_{22} = 0$ und

$$(44) \qquad k_{12} = \frac{\hat{b}_z}{B_z^2}$$

Wie bei der x-/z-Konfiguration der Magnetspulen werden $k_y$, $k_l$ in (37) so gewählt, daß der Regelkreis des Raddralls die x-/z-Bewegung möglichst wenig stört.

Die Nutation wird ausschließlich mit der y-Spule geregelt, d.h.

$$(45) \qquad \begin{pmatrix} m_z^{(\omega)} \\ m_y^{(\omega)} \end{pmatrix} = \begin{pmatrix} 0 & 0 \\ -k_l & -k_2 \end{pmatrix} \begin{pmatrix} \omega_x \\ \omega_z \end{pmatrix}$$

wobei die Reglerverstärkungen $k_1$, $k_2$ vom Erdmagnetfeld abhängen

$$(46) \qquad k_1 = \frac{\hat{b}_z}{B_z^2} \, \hat{k}_1$$

$$(47) \qquad k_2 = \frac{\hat{b}_x}{B_x^2} \, \hat{k}_2$$

Für $I_z = I_x$ und $\hat{k}_2 = -\hat{k}_1 = k < 0$ führt dies auf ein charakteristisches Polynom des geschlossenen Nutationsregelkreises der Form

$$(48) \qquad s^2 + ks + \frac{k_w^2}{I_x^2} = 0$$

d.h. die Eigenwerte sind zeitvariant und die Regelung bewirkt nur eine Dämpfung aber keine Eckfrequenzerhöhung. Eine Nutationsregelung dieser Art ist Stand der Technik und z.B. in /2/ beschrieben.

Als gesamtes magnetisches Moment der Regelung ergibt sich

$$(50) \qquad \begin{pmatrix} m_x \\ m_y \end{pmatrix} = \begin{pmatrix} m_x^{(h)} \\ m_y^{(h)} \end{pmatrix} + \begin{pmatrix} m_x^{(\omega)} \\ m_y^{(\omega)} \end{pmatrix}$$

Phasenverschiebung des Störmoments

Die Regelgüte wird im wesentlichen durch das x-Störmoment beeintrachtigt, da dieses zum einen betragsmäßig größer ist als die y-Komponente des Störmoments, und zum anderen dieses nicht mit Hilfe des Drallradmoments, sondern mittels der y-Magnetspule und der z-Komponente des Erdmagnetfeldes kompensiert werden muß, siehe (39).

Eine ungünstige Konfiguration hinsichtlich der Regelgüte ist dann gegeben, wenn bei relativ großem x-Störmoment eine kleine $b_z$-Komponente (und somit eine kleine x-Komponente des Stellmoments) vorliegt Der schlechteste Fall ist bei einem Phasenwinkel von 90° zwischen $b_z$ und $\tau_x$ gegeben, d.h.

$$(51) \qquad b_z = B_z \sin\eta \qquad\qquad \text{(gemäß (1))}$$

und

$$(52) \qquad \tau_{Dx} = \hat{\tau}_x \cos\eta = \hat{\tau}_x \sin(\eta + 90°) \qquad\qquad \text{(gemäß (19))}$$

Wird nun die y-Spule mit einem konstanten Wert $m_y^{(p)}$ beaufschlagt, was einem "künstlichen" Störmoment mit gleicher Phasenlage wie $b_z$ entspricht, so erhält man folgendes Gesamtstörmoment um die x-Achse

$$(53) \qquad \dot{\tau}_{Dx} = \hat{\tilde{\tau}}_x \sin(\eta + \varphi)$$

mit

$$(54) \qquad \tilde{\tau}_{Dx} = \sqrt{(B_z\, m_y)^2 + \hat{\tau}_{Dx}^2}$$

$$(55) \qquad \varphi = \tan^{-1}\frac{\hat{\tau}_x}{B_x m_y}$$

d.h. die Amplitude des neuen Gesamtstörmoments $\tau_{Dx}^\bullet$ ist zwar größer als die des ursprunglichen Störmoments $\tau_{Dx}$, jedoch kann die Phasenlage gezielt beeinfluß werden, was eine deutliche Verbesserung der Regelgüte zur Folge hat. Beispiel: Erhöht man den Betrag des Störmoments um $\sqrt{2}$, so verschiebt man die Phase um 45°

Statt (50) ergibt sich nun als gesamtes magnetisches Stellmoment

$$(56) \qquad \begin{pmatrix} m_x \\ m_y \end{pmatrix} = \begin{pmatrix} m_x^{(h)} \\ m_y^{(h)} \end{pmatrix} + \begin{pmatrix} m_x^{(\omega)} \\ m_y^{(\omega)} \end{pmatrix} + \begin{pmatrix} 0 \\ m_y^{(p)} \end{pmatrix}$$

4. <u>Zusammenfassung der wichtigsten Merkmale</u>

<u>Annahmen bzgl. Satellitenkonfiguration</u>

- Orbit mit mittlerer Bahninklination, d h alle 3 Komponenten des Erdmagnetfeldes sind im allgemeinen ungleich null.
- Die Solargeneratoren werden aus Gründen der Energieversorgung des Satelliten verdreht und verkippt, so daß die größten (dominanten) Störmomente auf Grund der Deviationsmomente und dem Gravitationsgradienten verursacht werden.

<u>Instrumentierung</u>

Zur Regelung der Lage und des Raddralls des Satelliten werden folgende Komponenten verwendet:

- 2-achsiger Erdsensor
- Drallrad in y-Achse

- 2 Magnetspulen, vorzugsweise in x/z Konfiguration, sonst x/y-Konfiguration
- Bordrechner mit Bahnmodell und Erdmagnetfeld-Modell, sowie den Regelalgorithmen

### Aufgabe

Erdorientierte Ausrichtung des Satelliten um alle drei Achsen und Regelung des Raddralls bzgl. Referenzwert $h_{wRef}$. Durch die Magnetspulenansteuerung sind alle drei Achsen sowie die Raddrallregelung miteinander verkoppelt. Störmomente wirken hauptsächlich in der x- und y-Achse, hervorgerufen durch den Gravitationsgradienten.

### Algorithmen

#### a) x/z Konfiguration der Magnetspulen

- Drallregler (Lageregler), so daß

$$k_{11} = 0$$

$$b_y(k_{13} - k_{31}) = 2D\omega_0$$

$$c_0^2 + c_0 b_y k_{33} - b_y^2 k_{13} k_{31} = \omega_0^2$$

wobei D und $\omega_0$ die gewunschte Dämpfung und Eckfrequenz des geschlossenen x/z Lageregelkreises beschreiben.
- Raddrall-Regelung mit einem PI-Regelgesetz zur Minimierung der Störung auf den x/z-Lageregelkreis
- Störgrößenkompensation um die x-Achse
- Storgrößenreduktion durch Verschieben des aktuellen Drehwinkels des Solargenerators bzgl. dem nominalen Drehwinkel
- Beobachter zur Schätzung des Gierwinkels und der Giergeschwindigkeit

#### b) x/y Konfiguration der Magnetspulen

- Näherungsweise Entkopplung der x- und z-Achse durch Entkopplungsmatrix E
- Regler für Lage und Raddrall mit den Verstärkungen

$$k_{11} = 0$$

$$k_{23} = \hat{k}_{23} \, \hat{b}_z / B_z^2$$

$$k_{21} = \hat{k}_{21} \, \hat{b}_z / B_z^2$$

wobei $k_{13}$, $\hat{k}_{21}$ und $\hat{k}_{23}$ so bestimmt werden, daß gilt [1]

$$b_y k_{13} + \tfrac{1}{2} \, \hat{k}_{21} = 2D \, \omega_0$$

[1] Dies ergibt sich aus (41) mit $\det \equiv s^2 + 2D\omega_0 s + \omega_0^2$ sowie (43), wobei der Faktor $1/2$ durch Mittelung des Ausdrucks $b_z \hat{b}_z / B_z^2$ über einen Bahnumlauf entsteht.

$$c_0^2 - \tfrac{1}{2}\,\hat{k}_{23} + b_y\,k_{13}\,\tfrac{1}{2}\,\hat{k}_{21} = \omega_0^2$$

- Raddrallregelung mit einem PI-Regter zur Minimierung der Störung auf den x/z-Lageregelkreis und einer Ansteuerung über die x-Spule mit

$$k_{22} = 0$$

$$k_{12} = \hat{b}_z / B_z^2$$

- Beobachter zur Schätzung von Gierlage und -Geschwindigkeit wie bei x/z-Spulenkonfiguration
- Störgrößenreduktion wie bei x/z-Spulenkonfiguration

Die Abbildungen zeigen in schematischer Weise:

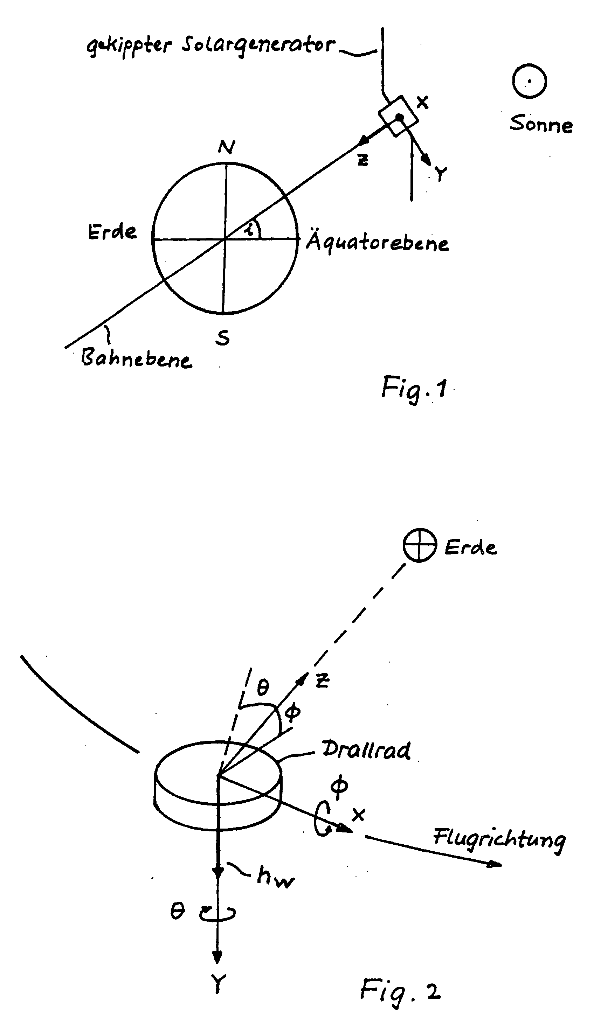

Fig. 1    Satellitenbahn und Achsbezeichnungen
Fig. 2    Definition von $\Phi$, $\Theta$ und $h_w$

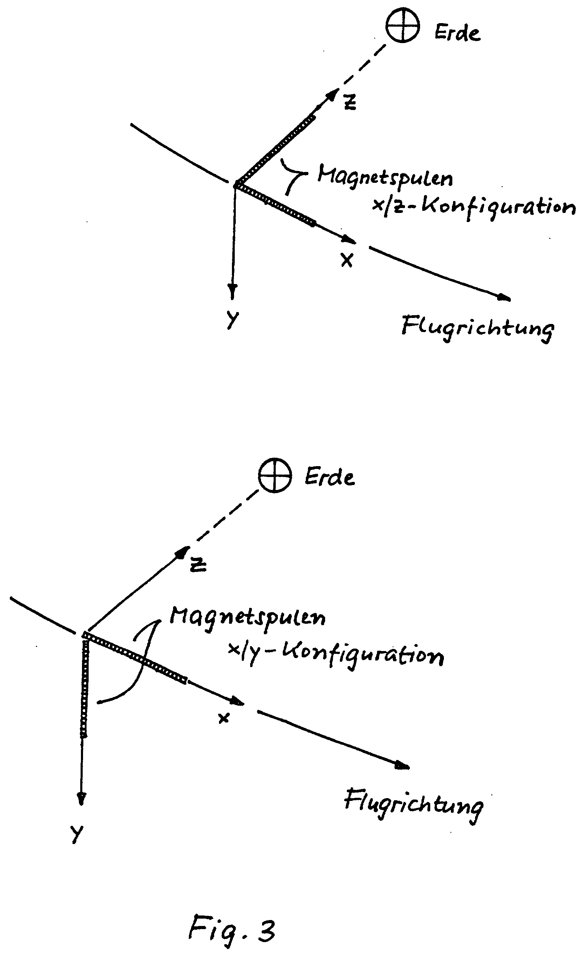

Fig. 3    Konfiguration der Magnetspulen

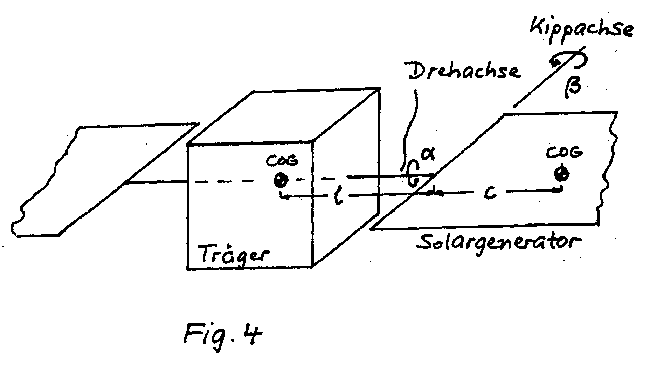

Fig. 4    Definition von Dreh- und Kippwinkel
Fig. 5    Regler, Gesamtübersicht

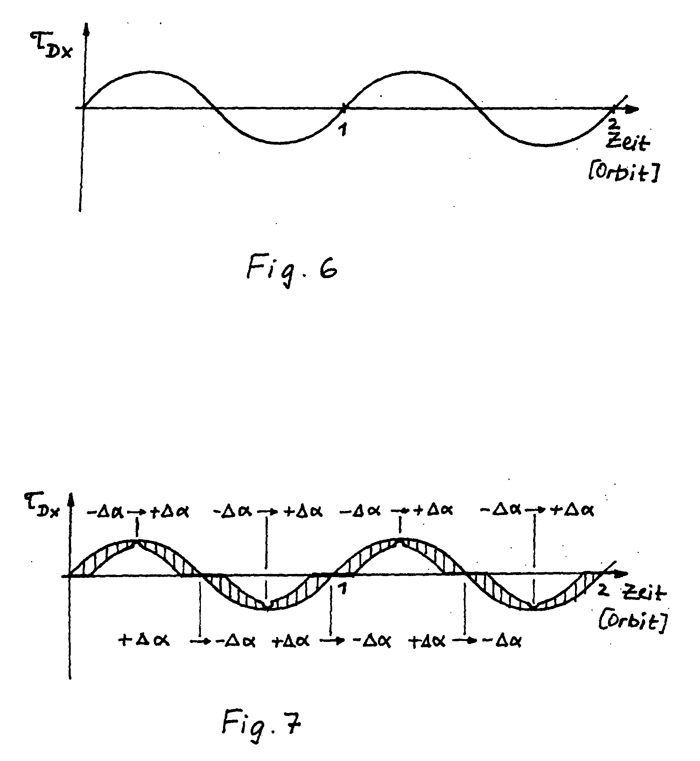

Fig. 6    Störmoment in Rollen und Gravitationsgradient
Fig. 7    Effekt der Störgrößenreduktion

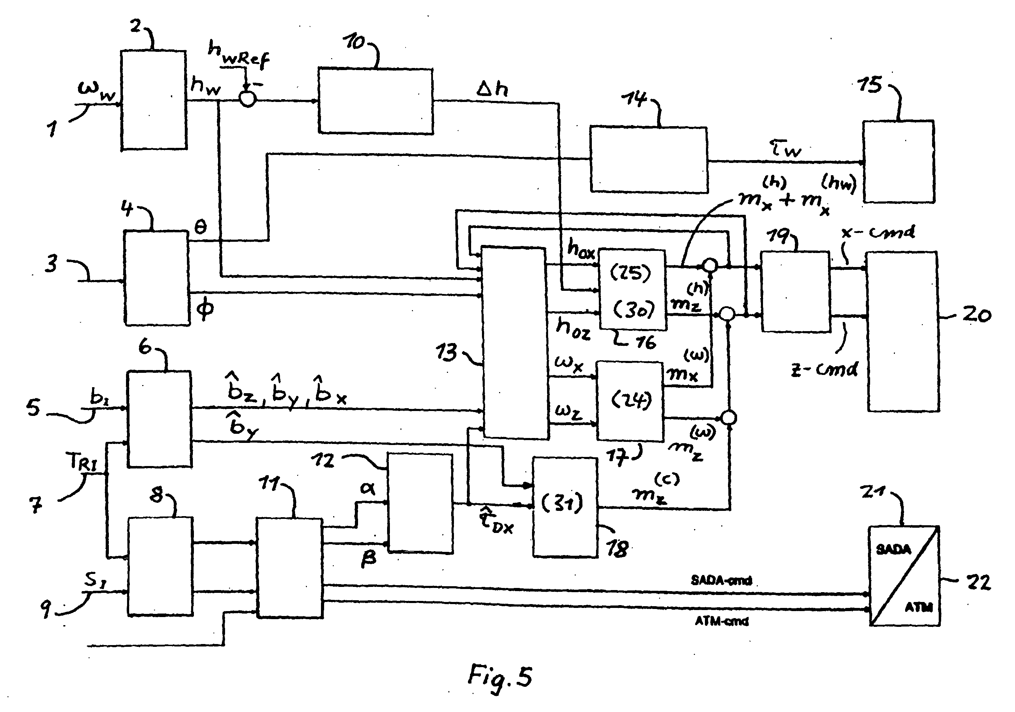

Die Bezugsziffem in Fig. 5 haben folgende Bedeutung:

1    Drallrad-Drehgeschwindigkeitsdaten
2    Signalaufbereitung
3    Erdsensordaten
4    Signalaufbereitung
5    Inertialer Magnetfeldvektor
6    Magnetfeldberechnung
7    Transformationsmatrix Inertial-Referenz
8    SADA- und ATM-Winkelberechnung
9    Inertialer Sonnenvektor
10    Drehimpulsvorfilter
11    SADA- und ATM-Kommando-Algorithmus
12    Störmomentenberechnung
13    Beobachter
14    Nicklageregler
15    Drallrad (y-Achse)
16    Drehimpulsregler
17    Nutationsregler
18    Störmomentkompensation
19    Modulator
20    Magnetspulen (x/z-Achsen)
21    Solargenerator(dreh)antrieb
22    Solargeneratorkippmechanismus

Referenzen

/1/ Magnetic Momentum Bias Attitude Control with Two-Gimballed Appendages Jeff Wesley Fisher et.al. 18th Annual AAS Guidance and Control Conference, Keystone, Colorado, 1995, AAS Paper 95-005

/2/ Comparative Stability Analyses and Performance of Magnetic Controllers for Momentum Bias Satellites

**EP 0 750 237 B1**

Hari B. Hablani
AAS Paper 93-278

**Patentansprüche**

1. Verfahren zur Lage-, Nutations- und Raddrallregelung für einen Satelliten, der um zwei orthogonale Achsen drehbare und kippbare Solargeneratoren trägt, wobei die Lage-, Nutations- und Raddrallregelung mit Hilfe eines zweiachsig messenden Erdsensors, eines mit seiner Rotationsachse parallel zur Nickachse orientierten Drallrades sowie zwei Magnetspulen erfolgt, von denen eine Magnetspule im wesentlichen parallel zur Rollachse ausgerichtet ist und die zweite Magnetspule im wesentlichen parallel zur Gierachse ausgerichtet ist, **dadurch gekennzeichnet, dass**

   - die Lage-, Nutations- und Raddrallregelung auf einer erdnahen Bahn mit mittlerer Inklination in erdorientierter Ausrichtung erfolgt,

   - die Lage- und Nutationsregelung durch Aktivierung der Magnetspulen unter Anwendung jeweils eines linearen Regelgesetzes, welches im Falle der Lageregelung in Abhängigkeit von dem vom Erdsensor gemessenen Rollwinkel sowie dem durch einen Beobachter geschätzten oder von einem zusätzlichen, auf dem Satelliten angebrachtem Sensor gemessenen Gierwinkel und im Falle der Nutationsregelung in Abhängigkeit von einer auf der Basis der Erdsensormessungen ermittelter Rollwinkeländerung sowie einer durch den Beobachter geschätzten oder von einem zusätzlichen, auf dem Satelliten angebrachtem Sensor gemessener Gierwinkeländerung durchgeführt werden und

   - die Raddrallregelung durch Aktivierung mindestens der parallel zur Rollachse ausgerichteten Magnetspule in Abhängigkeit von der Sollwertabweichung des Raddralls sowie der Gierkomponente des Erdmagnetfeldes unter Anwendung eines PI-Regelgesetzes erfolgt.

2. Verfahren nach Anspruch 1, **dadurch gekennzeichnet, dass** die Reglerverstärkung der Raddrallregelung so klein gewählt wird, dass die Lageregelung in Rollrichtung und Gierrichtung nur schwach von der Raddrallregelung gestört wird.

3. Verfahren nach Anspruch 1 oder 2, **dadurch gekennzeichnet, dass** das lineare Regelgesetz für die Lageregelung gegeben ist durch

$$\begin{bmatrix} m_x^{(h)} \\ m_z^{(h)} \end{bmatrix} = \begin{bmatrix} k_{11}^{(h)} & k_{13}^{(h)} \\ k_{31}^{(h)} & k_{33}^{(h)} \end{bmatrix} \bullet \begin{bmatrix} h_{0x} \\ h_{0z} \end{bmatrix}$$

und für die Nutationsregelung gegeben ist durch

$$\begin{bmatrix} m_x^{(\omega)} \\ m_z^{(\omega)} \end{bmatrix} = \begin{bmatrix} k_{11}^{(\omega)} & k_{13}^{(\omega)} \\ k_{31}^{(\omega)} & k_{33}^{(\omega)} \end{bmatrix} \bullet \begin{bmatrix} \omega_x \\ \omega_z \end{bmatrix}$$

mit den magnetischen Momenten $m_x^{(h)}$, $m_z^{(h)}$, $m_x^{(\omega)}$, $m_z^{(\omega)}$, die durch die zwei Magnetspulen erzeugt werden, den Roll- und Gierkomponenten $h_{ox}$, $h_{oz}$ des Satellitendrallvektors, welche mit dem Roll- und Gierwinkel $\Phi$ und $\psi$ verknüpft sind über $h_{ox} = \psi h_w$ und $h_{oz} = -\Phi h_w$, wobei $h_w$ den Drall des Drallrades darstellt, mit den Geschwindigkeiten $\omega_x$, $\omega_z$ der Roll- und Gierwinkeländerung, und mit den Verstärkungsparametern $k_{ij}^{(h)}$, $k_{ij}^{(\omega)}$.

16

**4.** Verfahren zur Lage-, Nutations- und Raddrallregelung für einen Satelliten, der um zwei orthogonale Achsen drehbare und kippbare Solargeneratoren trägt, wobei die Lage-, Nutations- und Raddrallregelung mit Hilfe eines zweiachsig messenden Erdsensors, eines mit seiner Rotationsachse parallel zur Nickachse orientierten Drallrades sowie zwei Magnetspulen erfolgt, von denen eine Magnetspule im wesentlichen parallel zur Rollachse ausgerichtet ist und die zweite Magnetspule im wesentlichen parallel zur Nickachse ausgerichtet ist und wobei die Lage-, Nutations- und Raddrallregelung auf einer erdnahen Bahn mit mittlerer Inklination in erdorientierter Ausrichtung erfolgt, **dadurch gekennzeichnet, dass**

- die Lage- und Nutationsregelung durch Aktivierung der Magnetspulen unter Anwendung jeweils eines linearen Regelgesetzes, welches im Falle der Lageregelung in Abhängigkeit von dem vom Erdsensor gemessenen Rollwinkel sowie dem durch einen Beobachter geschätzten Gierwinkel und im Falle der Nutationsregelung in Abhängigkeit von einer auf der Basis der Erdsensormessungen ermittelter Rollwinkeländerung sowie einer durch den Beobachter geschätzten Gierwinkeländerung durchgeführt werden und

- die Raddrallregelung durch Aktivierung beider Magnetspulen in Abhängigkeit von der Sollwertabweichung des Raddralls sowie der Gierkomponente des Erdmagnetfeldes unter Anwendung eines PI-Regelgesetzes erfolgt.

**5.** Verfahren nach Anspruch 4, **dadurch gekennzeichnet, dass** die Reglerverstärkung der Raddrallregelung so klein gewählt wird, dass die Lageregelung in Rollrichtung und Gierrichtung nur schwach von der Raddrallregelung gestört wird.

**6.** Verfahren nach Anspruch 4 oder 5, **dadurch gekennzeichnet, dass** zur Lage- und Raddrallregelung zunächst ein kombiniertes lineares Regelgesetz zur Aktivierung beider Magnetspulen in Abhängigkeit von dem vom Erdsensor gemessenen Rollwinkel, dem von einem Beobachter geschätzten Gierwinkel sowie der Sollwertabweichung des Raddralls aufgestellt wird.

**7.** Verfahren nach Anspruch 6, **dadurch gekennzeichnet,** das kombinierte lineare Regelgesetz eine Entkopplungsmatrix zur Entkopplung der Rollachse und der Gierachse aufweist.

**8.** Verfahren nach einem der Ansprüche 4 bis 7, **dadurch gekennzeichnet, dass** die Nutationsregelung ausschließlich durch Aktivierung der parallel zur Nickachse ausgerichteten Magnetspule erfolgt.

**9.** Verfahren nach einem der Ansprüche 1 bis 8, **dadurch gekennzeichnet, dass** eine Kompensation von Störmomenten erfolgt, die aus einem Verdrehen und Verkippen der Solargeneratoren des Satelliten resultiert.

**10.** Verfahren nach Anspruch 9, **dadurch gekennzeichnet, dass** die Drehgeschwindigkeit für das Verdrehen der Solargeneratoren im Bereich der Nultdurchgänge des Störmomentprofils um die Rollachse, das aus dem Verdrehen der Solargeneratoren resultiert, auf Null geregelt wird und im Bereich der Extrema des Störmomentprofils erhöht wird.

**Claims**

**1.** A method for attitude, nutation and wheel momentum control for a satellite that carries solar generators rotatable and tiltable about two orthogonal axes, wherein the attitude, nutation and wheel momentum control is effected by means of a biaxially measuring earth sensor, a rotating wheel having its axis of rotation orientated parallel to the pitch axis and two magnet coils, of which one magnet coil is aligned substantially parallel to the roll axis and the second magnet coil is aligned substantially parallel to the yaw axis, **characterised in that**

- the attitude, nutation and wheel momentum control is effected on a near-earth orbit with mean inclination in earth-oriented alignment
- the attitude and nutation control is effected by activation of the magnet coils using in each case a linear control law that is implemented in the case of the attitude control in dependence on the roll angle measured by the earth sensor and also on the yaw angle estimated by an observer or measured by an additional sensor mounted on the satellite and in the case of the nutation control in dependence on a roll angle change determined on the basis of the earth sensor measurements and also on a yaw angle change estimated by the observer or measured by an additional sensor mounted on the satellite, and

- the wheel momentum control is effected by activation of at least the magnet coil aligned parallel to the roll axis in dependence on the deviation from set point of the wheel momentum and on the yaw component of the terrestrial magnetic field using a PI control law.

**2.** A method according to claim 1, **characterised in that** the controller amplification of the wheel momentum control is selected to be so small that the wheel momentum control only weakly interferes with the attitude control in roll direction and yaw direction.

**3.** A method according to claim 1 or 2, **characterised in that** the linear control law for the attitude control is given by

$$\begin{bmatrix} m_x^{(h)} \\ m_z^{(h)} \end{bmatrix} = \begin{bmatrix} k_{11}^{(h)} & k_{13}^{(h)} \\ k_{31}^{(h)} & k_{33}^{(h)} \end{bmatrix} \bullet \begin{bmatrix} h_{0x} \\ h_{0z} \end{bmatrix}$$

and for the nutation control is given by

$$\begin{bmatrix} m_x^{(\omega)} \\ m_z^{(\omega)} \end{bmatrix} = \begin{bmatrix} k_{11}^{(\omega)} & k_{13}^{(\omega)} \\ k_{31}^{(\omega)} & k_{33}^{(\omega)} \end{bmatrix} \bullet \begin{bmatrix} \omega_x \\ \omega_z \end{bmatrix}$$

with the magnetic moments $m_x^{(h)}$ $m_z^{(h)}$, $m_x^{(\omega)}$ $m_x^{(\omega)}$, which are generated by the two magnet coils, the roll and yaw components $h_{ox}$, $h_{oz}$ of the satellite momentum vector, which are linked with the roll angle and yaw angle $\Phi$ and $\Psi$ by way of $h_{ox} = \Psi h_w$ and $h_{oz} = -\Phi h_w$, wherein $h_w$ represents the momentum of the rotating wheel, with the speeds $\omega_x$, $\omega_z$ of the roll and yaw angle change, and with the reinforcing parameters $k_{ij}^{(h)}$, $k_{ij}^{(\omega)}$.

**4.** A method for attitude, nutation and wheel momentum control for a satellite that carries solar generators rotatable and tiltable about two orthogonal axes, wherein the attitude, nutation and wheel momentum control is effected by means of a biaxially measuring earth sensor, a rotating wheel having its axis of rotation orientated parallel to the pitch axis and two magnet coils, of which one magnet coil is aligned substantially parallel to the roll axis and the second magnet coil is aligned substantially parallel to the pitch axis, and wherein the attitude, nutation and wheel momentum control is effected on a near-earth orbit with mean inclination in earth-oriented alignment, **characterised in that**

- the attitude and nutation control is effected by activation of the magnet coils using in each case a linear control law that is implemented in the case of the attitude control in dependence on the roll angle measured by the earth sensor and also on the yaw angle estimated by an observer and in the case of the nutation control in dependence on a roll angle change determined on the basis of the earth sensor measurements and also on a yaw angle change estimated by the observer, and

- the wheel momentum control is effected by activation of both magnet coils in dependence on the deviation from set point of the wheel momentum and on the yaw component of the terrestrial magnetic field using a PI control law.

**5.** A method according to claim 4, **characterised in that** the controller amplification of the wheel momentum control is selected to be so small that the wheel momentum control only weakly interferes with the attitude control in roll direction and yaw direction.

**6.** A method according to claim 4 or 5, **characterised in that** for attitude and wheel momentum control first of all a combined linear control law is set up to activate both magnet coils in dependence on the roll angle measured by the earth sensor, on the yaw angle estimated by an observer and also on the deviation from set point of the wheel momentum.

**7.** A method according to claim 6, **characterised in that** the combined linear control law comprises a decoupling matrix for decoupling the roll axis and the yaw axis.

**8.** A method according to any one of claims 4 to 7, **characterised in that** the nutation control is effected exclusively by activation of the magnet coil aligned parallel to the pitch axis.

**9.** A method according to any one of claims 1 to 8, **characterised in that** a compensation of disturbing torques is effected, which results from a rotation and tilting of the solar generators.

**10.** A method according to claim 9, **characterised in that** the rotating speed for the rotation of the solar generators in the region of the zero crossings of the disturbing torque profile about the roll axis x, which profile results from the rotation of the solar generators, is controlled to zero and is increased in the region of the extremes of the disturbing torque profile.

**Revendications**

**1.** Procédé pour le réglage de la position, de la nutation et du moment d'une roue cinétique pour un satellite, qui supporte des générateurs solaires pouvant tourner et basculer autour de deux axes orthogonaux, le réglage de position, de nutation et du moment de roue cinétique s'effectuant à l'aide d'un capteur terrestre mesurant sur deux axes, d'une roue cinétique orientée avec son axe de rotation parallèlement à l'axe de tangage et de deux bobines magnétiques, dont l'une est montée sensiblement parallèlement à l'axe de roulis et la deuxième bobine sensiblement parallèlement ,à l'axe de lacet, **caractérisé en ce que**

- le réglage de la position, de la nutation et du couple de roue cinétique s'effectue sur une orbite proche de la terre avec une inclinaison moyenne dans un alignement orienté vers la terre.
- le réglage de la position et de la nutation est effectué par l'activation des bobines magnétiques en utilisant à chaque fois une loi de réglage linéaire, qui est effectuée dans le cas du réglage de la position en fonction de l'angle de roulis mesuré par le capteur terrestre et de l'angle de lacet estimé par un observateur ou mesuré par un capteur supplémentaire disposé sur le satellite et dans le cas du réglage de la nutation en fonction d'une modification de l'angle de roulis déterminé sur la base des mesures du capteur terrestre et d'une variation de l'angle de lacet évaluée par l'observateur ou mesuré par un capteur supplémentaire disposé sur le satellite et
- **en ce que** le réglage du moment de roue cinétique s'effectue par l'activation d'au moins la bobine magnétique orientée parallèlement à l'axe de roulis en fonction de l'écart de réglage de la roue cinétique et du composant de lacet du champ magnétique terrestre en utilisant une loi de réglage PI.

**2.** Procédé selon la revendication 1, **caractérisé en ce que** l'amplification de régulateur du réglage du moment de roue cinétique est choisie assez petite pour que le réglage de la position dans le sens de roulis et le sens de lacet ne soit que faiblement perturbé par le réglage du moment de roue cinétique.

**3.** Procédé selon la revendication 1 ou 2, **caractérisé en ce que** la loi de réglage linéaire pour, le réglage de la position est donnée par l'égalité suivante :

$$
\begin{bmatrix} m_x^{(h)} \\ m_z^{(h)} \end{bmatrix} = \begin{bmatrix} k_{11}^{(h)} & k_{13}^{(h)} \\ k_{31}^{(h)} & k_{33}^{(h)} \end{bmatrix} \cdot \begin{bmatrix} h_{0x} \\ h_{0z} \end{bmatrix}
$$

et pour le réglage de la nutation par l'égalité suivante :

$$\begin{bmatrix} m_X{}^{(\omega)} \\ \\ m_Z{}^{(\omega)} \end{bmatrix} = \begin{bmatrix} k_{11}{}^{(\omega)} & k_{13}{}^{(\omega)} \\ \\ k_{31}{}^{(\omega)} & k_{33}{}^{(\omega)} \end{bmatrix} \cdot \begin{bmatrix} \omega_X \\ \\ \omega_Z \end{bmatrix}$$

avec les moments magnétiques $m_x{}^{(h)}$, $m_z{}^{(h)}$, $m_x{}^{(\omega)}$, $m_z{}^{(\omega)}$, qui sont générés par les deux bobines magnétiques, les composants de roulis et de lacet $h_{OX}$, $h_{OZ}$ du facteur de rotation de satellite, qui sont liés à l'angle de roulis et à l'angle de lacet $\phi$ et $\psi$ par l'intermédiaire de $h_{OX} = \psi h_W$ et $h_{OZ} = -\phi h_W$, $h_W$ représentant la rotation de la roue cinétique, avec les vitesses $\omega_x$, $\omega_z$ de la variation de l'angle de roulis et de l'angle de lacet et avec les paramètres d'amplification $k_{ij}{}^{(h)}$, $k_{ij}{}^{(\omega)}$.

4. Procédé pour le réglage de la position, de la nutation et du moment de roue cinétique pour un satellite, qui porte deux générateurs solaires pouvant tourner et basculer autour de deux axes orthogonaux, le réglage de la position, de la nutation et du couple de roue cinétique s'effectuant à l'aide d'un capteur terrestre mesurant sur deux axes, d'une roue cinétique orientée avec son axe de rotation parallèlement à l'axe de tangage et deux bobines magnétiques, dont l'une est orientée sensiblement parallèlement à l'axe de roulis et la deuxième sensiblement parallèlement à l'axe de tangage, et moyennant quoi le réglage de la position, de la nutation et du moment de roue cinétique s'effectue sur une trajectoire proche de la terre avec une inclinaison centrale dans l'alignement orienté vers la terre, **caractérisé en ce que**

- le réglage de la position et de la nutation est effectué par l'activation des bobines magnétiques en utilisant à chaque fois une loi de réglage linéaire, qui s'effectue dans le cas du réglage de la position en fonction de l'angle de roulis mesuré par le capteur terrestre et de l'angle de lacet évalué par un observateur ou dans le cas du réglage de la nutation en fonction d'une variation de l'angle de roulis calculée sur la base des mesures du capteur terrestre et d'une variation de l'angle de lacet évalué par l'observateur et
- le réglage du moment de roue cinétique s'effectue par l'activation de deux bobines magnétiques en fonction de l'écart de référence du moment de roue cinétique et du composant de lacet du champ magnétique terrestre en appliquant une loi de réglage PI.

5. Procédé selon la revendication 4, **caractérisé en ce que** l'amplification du régulateur du réglage du moment de roue cinétique est choisie suffisamment petite pour que le réglage de la position dans le sens de roulis et dans le sens de lacet ne soit que faiblement perturbé par le réglage du moment de roue cinétique.

6. Procédé selon la revendication 4 ou 5, **caractérisé en ce que**, pour le réglage de la position et du moment de roue cinétique, on met en place pour commencer une loi de réglage linéaire combinée pour l'activation de deux bobines magnétiques en fonction de l'angle de roulis mesuré par le capteur terrestre, de l'angle de lacet évalué par l'observateur et de l'écart de référence du moment de roue cinétique.

7. Procédé selon la revendication 6, **caractérisé en ce que** la loi de réglage linéaire combinée présente une matrice de découplage pour le découplage de l'axe de roulis et de l'axe de lacet.

8. Procédé selon l'une quelconque des revendications 4 à 7, **caractérisé en ce que** le réglage de la nutation s'effectue exclusivement par l'activation de la bobine magnétique orientée parallèlement à l'axe de tangage.

9. Procédé selon l'une quelconque des revendications 1 à 8, **caractérisé en ce qu'**on a une compensation de couples parasites qui résulte d'une rotation et d'un basculement des générateurs solaires du satellite.

10. Procédé selon la revendication 9, **caractérisé en ce que** la vitesse de rotation pour la rotation des générateurs solaires dans la zone des passages par 0 du profil de couple perturbateur autour de l'axe de roulis, qui résulte de la rotation des générateurs solaires, est réglée sur 0 et est augmentée dans la zone des extrêmes du profil de couple perturbateur.

Fig.1

Fig. 2

Fig. 3

Fig. 4

Fig. 5

Fig. 6

Fig. 7